# EUROPÄISCHE PATENTSCHRIFT

(11) **EP 1 224 785 B1**
(45) Veröffentlichungstag und Bekanntmachung des Hinweises auf die Patenterteilung: **23.11.2005**
(21) Anmeldenummer: 00958152.1
(22) Anmeldetag: 18.07.2000
(51) Int. Cl.: H04L 29/06

(54) **VERFAHREN UND ANORDNUNG ZUR VERGEBÜHRUNG IN KOMMUNIKATIONSNETZEN**
COMMUNICATION NETWORK CHARGING METHOD AND SYSTEM
PROCEDE ET DISPOSITIF DE FACTURATION DANS DES RESEAUX DE COMMUNICATION

(30) Priorität: 29.10.1999 DE 19952345
(43) Veröffentlichungstag der Anmeldung: 24.07.2002
(73) Patentinhaber: SIEMENS AKTIENGESELLSCHAFT, 80333 München (DE)
(72) Erfinder: LILGE, Manfred, D-13353 Berlin (DE)
(86) Internationale Anmeldenummer: PCT/DE2000/002334
(87) Internationale Veröffentlichungsnummer: WO 2001/033800

(56) Entgegenhaltungen:
- WO-A-00/13370
- WO-A-97/26739
- WO-A-98/56202
- WO-A-99/21350
- WO-A-99/29065

## Beschreibung

### Fachgebiet der Erfindung

In Kommunikationsnetzen stellen immer mehr Informationsanbieter, sogenannte "Content Provider", auf ihren Servern Informationen (Dateninhalte) zur Verfügung, welche von Teilnehmern aus dem Kommunikationsnetz angefordert und auf ihr Endgerät heruntergeladen werden können. Dabei kann es sich um Daten jeder Natur handeln, beispielsweise Kinoprogramme, Fahrplanauskünfte u. v. a. m. Diese liegen, sofern es das Internet betrifft, oftmals als HTML-Seiten, WML- und zunehmend auch als XML-Seiten vor (im Weiteren nur als WML-Seiten bezeichnet).
Für kleine mobile Endgeräte (beispielsweise Mobiltelefone, Handheld- oder Palmtop-Computer, Pager ...) gibt es spezielle Anforderungen, aufgrund von Speicherplatz- und Anzeigebeschränkungen. Für die dazugehörigen "Microbrowser", welche unter WAP (Wireless Application Protocol) laufen, sind diese Informationen als WML-Seiten aufbereitet: die "Wireless Markup Language" ist eine Sprache, welche speziell für mobile Endgeräte mit kleinen und in ihren Fähigkeiten limitierten Anzeigevorrichtungen entwickelt worden ist. Benutzer von mobilen WAP-fähigen Endgeräten können diese Informationen über die Angabe der entsprechenden Adresse (URL) ebenfalls abrufen.

Das Anlegen, Pflegen, Verwalten und Bereitstellen der Daten-Seiten (insbesondere der Aktualität der hinterlegten Infomationen) verursacht Kosten, an denen die Teilnehmer beteiligt werden sollen, die auf diese Daten zugreifen.

### Stand der Technik

Allgemein ist es bekannt, dass heutige Mechanismen die Zeitdauer einer aufgebauten Datenverbindung zu einem Server vergebühren. Neuere Ansätze vergebühren das übertragene Datenvolumen.

Informationsanbieter (Content Provider) im Internet legen die ihnen entstandenen Kosten oftmals werbefinanziert um. Ihre HTML-Seiten beinhalten eine Reihe von Werbe-Banner und Logos, die durch Anklicken zu den HomePages der entsprechenden Produktanbieter führen. User, die auf die Seiten der Content Provider zugreifen, sehen neben der gewünschten Information diese Werbung.

Diese Lösung kann aufgrund der beschränkten Möglichkeiten von WAP-Endgeräten insbesondere nicht für WML-Inhalte angewendet werden. Augenblicklich ist keine Lösung dieses Problems bekannt.

In der Druckschrift WO 98/56202 wird bereits ein Verfahren zur Vergebührung des Übertragens von Kurzmitteilungen in einem Kommunikationsnetzen über eine Schnittstelle beschrieben. Die Höhe der Vergebührung ist dabei abhängig vom Inhalt der zu übertragenden Information, die Kurznachricht selber enthält eine Vergebührungsempfehlung die durch das Kurznachrichtenzentrum ausgewertet wird. Die Vergebührung wird jedoch erst nach der Übertragung der Informationen durchgeführt.

In der WO 99/29065 behandelt Informationen zur Vergebührung verschiedener Dienste speziell in einem paketorientierten Netz. Die Vergebührung des Dienstes wird auf herkömmliche Art durchgeführt, der Nutzer registriert sich bei einem Dienst und die Berechnung der Gebühr erfolgt nach Volumen, Zeitpunkt und -dauer und Dienstqualität. Die Verrechnung verschiedener Dienste geschieht in herkömmlicher Weise aber über eine zentrale Datenbank.

Aufgabe der Erfindung ist es, ein Verfahren und eine Anordnung zur Vergebührung der Übertragung von Informationen anzugeben, die die oben genannten Nachteile vermeidet.

### Darstellung der Erfindung

Diese Aufgabe wird gelöst durch ein Verfahren gemäß Patentanspruch 1 und eine Anordnung gemäß Patentanspruch 10.

Das Konzept beruht auf drei voneinander zu trennenden Elementen:
a) Die Kriterien zur Einordnung einer WML-Seite in ein Tarifkonzept oder der Festlegung eines Preises liegen beim Informationsanbieter (Content Provider). Dieser weiss, wel che bereitgestellten Informationen "teuer" und welche "billiger" sind. Aufgabe des Content Providers ist es, die von seinem Server abrufbaren Seiten durch zusätzliche Tarif- oder Preis-Informationen zu kennzeichnen. Diese Information ist in einer Ausführungsform der Erfindung in der WML-Seite (z. B. als eigenes WML-Tag) oder im Header der entsprechenden HTTP-Nachricht verborgen und wird beim Abrufen mit zum Teilnehmer übertragen.
   Ein "WAP-GateWay" stellt die Schnittstelle zwischen Teilnehmer und der WAP-Datenwelt bzw Internet-Datenwelt dar. Sämtlicher von Teilnehmern abgerufener WML/HTML-Inhalt passiert ein WAP-Gateway (HTLM Daten-Seiten können hier in WML übersetzt werden). Dem WAP-GateWay kommt die zusätzliche Aufgabe zu, in den Daten-Seiten nach dort gespeicherten Tarif-Informationen zu suchen. Gebührenfreie Seiten enthalten keine Tarife und können das GateWay passieren. Werden Tarif-Informationen gefunden, so stellt das GateWay einen Charging Request an eine Netzeinheit, die Vergebührungsanfragen für Teilnehmer beantwortet. Wird der Charging Request positiv quittiert, dann zahlt der Teilnehmer für den Daten-Inhalt und der GateWay kann die Seite passieren lassen. Bei einer negativen Quittung wird der Inhalt verworfen und der Teilnehmer darüber informiert.
   Alternativ dazu kann auf dem WAP-Gateway eine Datenbasis über die zu vergebührenden WML-Seiten abgelegt sein. Zu diesen Seiten ist deren URL sowie eine Tarif- oder Preisinformation abgelegt. Beim Zugriff eines Teilnehmers auf solch eine WML-Seite stellt der WAP-Gateway anhand der gespeicherten Informationen einen entsprechenden Charging Request.... URLs zu denen kein Eintrag in der Datenbank gefunden werden, sind gebührenfrei und können den WAP-Gateway passieren.
b) Es gibt eine Netzeinheit, die Vergebührungsanfragen für Teilnehmer beantwortet (im folgendem auch "PaymentBroker" genannt). Für jeden Teilnehmer ist ein individuelles Profil eingerichtet. Dies beinhaltet Informationen über:
   - Konteninformationen über die die Vergebührungsanfragen verrechnet werden können (Kreditkarte, Bankverbindung, Telefonrechnung, Prepaid-Konto, ...)
   - Regeln wie Vergebührungsanfragen beantwortet werden sollen. Diese Regeln können von mehreren Kriterien abhängig sein (Betrag der Gebührenanfrage, Kontostand, Informationsanbieter, Summe aller Gebührenanfragen innerhalb eines Zeitraumes, ...). In Abhängigkeit dieser Regeln kann der "PaymentBroker" die Gebührenanfrage eigenständig beantworten oder fragt in einer bevorzugten Ausgestaltungsform der Erfindung zuvor beim Teilnehmer an, ob er bereit ist für die WML-Seite zu zahlen.
   - Umrechnungstabellen von abstrakten Tarifinformationen in konkrete Geldbeträge unter Berücksichtigung beispielsweise persönlicher Rabatte, Sonderangebote, Mengenrabatt.
   - Beantwortet der "PaymentBroker" die Gebührenanfrage positiv, so ist die Bezahlung des WML-Inhaltes gesichert. Der Betreiber des PaymentBrokers zieht die Gebühren ein und leitet sie an den "Content Provider" weiter.

Für jeden Informationsanbieter (Content Provider) kann ebenfalls ein Profil angelegt sein. Dieses beinhaltet Informationen über:
■ Bevorzugtes Zahlverfahren (z.B.: Kunden dürfen nur über Kreditkarte bezahlen)
■ das zwischen dem Betreiber des PaymentBroker und dem ContentProvider verhandelte Inkasso-Verfahren (z.B.: Zeitpunkt der Rechnungslegung)
■ Beschränkungen, die der Betreiber des PaymentBroker dem ContentProvider auferlegt (temporärer Ausschluß aus dem Inkasso-Verfahren, Obergrenze für einzelne Bezahlvorgänge, ...)

Das Konzept sieht eine klare Aufgabenteilung vor:
- Der Informationsanbieter muß sich nur um die Bereitstellung der Inhalte sowie derer Tarif- oder Preiseinstufung kümmern. Er wird befreit von der Rechnungsschreibung und dem Eintreiben der Beträge.
- Das WAP-GateWay behält den Zugriff auf den Inhalt der übertragenen Daten und kontrolliert deren Transport.
- Der "PaymentBroker" kümmert sich ausschließlich um Vergebührungsaspekte in einer Gesamtsicht auf den Teilnehmer. Ein beim "PaymentBroker" eingerichtetes Teilnehmer-Profil kann für weitere Anwendungsfälle benutzt werden. Sensible Kontodaten müssen nur einmal vom Teilnehmer beim "PaymentBroker" hinterlegt werden und werden nicht an Dritte weitergegeben.

Weitere vorteilhafte Ausgestaltungen und Weiterbildungen sind in den Unteransprüchen angegeben.

Das erfindungsgemäße Verfahren wirkt sich besonders vorteilhaft für die beschriebenen Endgeräte aus, da vom Teilnehmer nicht gewünschte Informationen wie Werbebanner nicht übertragen werden.
Der Informationsanbieter kann eine Vergebührung seines Angebots durchführen, die dem tatsächlichen Aufwand entspricht, unabhängig vom dem vom Teilnehmer benutzten Endgerät.

### Kurzbeschreibung der Zeichungen

Im folgenden wird die Erfindung anhand von Ausführungsbeispielen erläutert. Dabei zeigen
- Figur 1: die Vergebührung gesteuert durch einen Vergebührungsagenten ("URL based Charging"),
- Figur 2: die Vergebührung gesteuert durch mit der zu vergebührenden Information mitgelieferten Vergebührungsinformation ("Preisschild", "Tag based Charging")
- Figur 3: die Vergebührung gesteuert durch ein Teilnehmerprofil sowie eine optionale Einverständnis-Abfrage beim Teilnehmer "(Automatic Charge Processing, Manual Charge Confirmation").

### Beschreibung der bevorzugten Ausgestaltungsformen

Es wird im folgenden eine IN basierte Realisierung der erfindungsgemäßen Lösung für dieses Problem vorgeschlagen:
Das IN System übernimmt die Rolle des "PaymentBrokers". Der "WAP GateWay" stellt sämtliche Charging Requests an das IN-System über ein noch zu definierendes Interface.

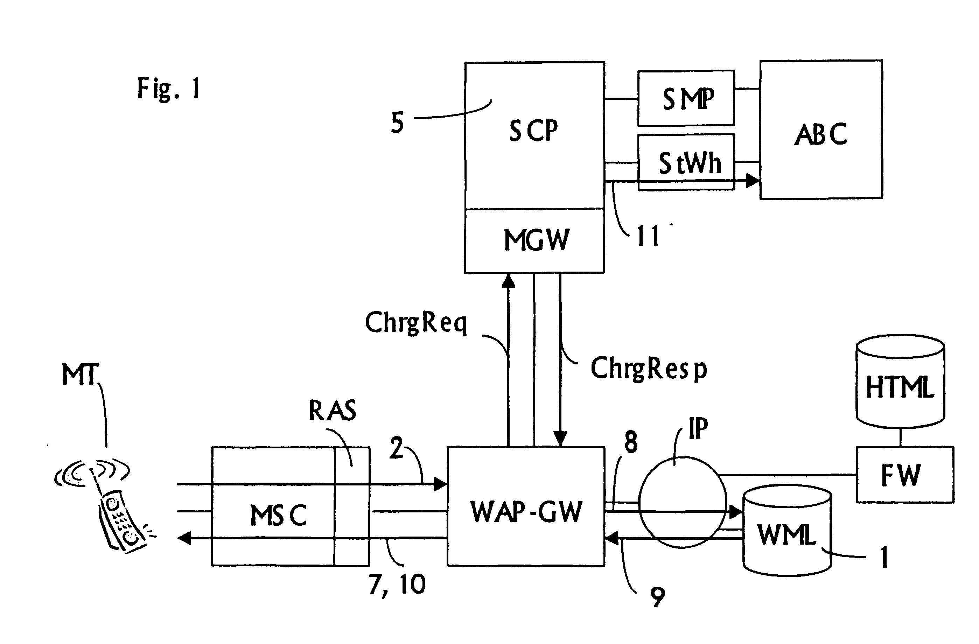

Figur 1 zeigt die Vergebührung gesteuert durch einen Vergebührungsagenten ("URL based Charging"). Das Kommunikationsnetz enthält eine Vermittlungsstelle, MSC, hier speziell für den Gebrauch in Mobilfunknetzen geeignet. Über diese Vermittlungsstelle fordert ein Teilnehmer über sein mobiles Endgerät, MT, von einem sogenannten Content Provider Informationen an. Diese liegen in Form von Daten-Seiten, beispielsweise in der Sprache HTML oder WML, welche speziell für mobile Endgeräte mit geringem Speicher und kleiner Anzeigekapazität entwickelt wurde.
In welcher Weise und an welchem Ort diese Daten-Seiten HTML, WML abgelegt werden, und über welchen physikalischen Weg darauf zugegriffen wird (beispielsweise über Intra- oder Internet, IP, und Zugriffssicherungen wie Firewalls, FW) ist für das erfindungsgemäße Vorgehen ohne Belang.

Um die Daten von einem Sprachnetz in ein Paketnetz und umgekehrt zu übersetzen, gibt es eine Vorrichtung RAS, die von der Wirkungsweise einem Modem entspricht.

In dem Ausführungsbeispiel wird die technische Realisierung der Erfindung durch ein Intelligentes Netz beschrieben (siehe dazu auch die Normen ITU Q.1200 folgende). Die hierfür benötigte Dienstesteuerung SCP kann einen Protokollumsetzer MGW enthalten, der jedoch nicht erfindungswesentlich ist.

Weiterhin wird die Dienstezentrale von Management-Instanz(en) SMP, StWh, unterstützt, die den Dienste-Operator und ContentProvider einen Zugang zu dem System ermöglichen. Hier werden Statistikdaten ausgewertet und die Vergebührungsdaten für den Operator verwaltet.

Zu vergebührende Daten-Seiten sind für das WAP-Gateway zugänglich gespeichert, 1. Das WAP-Gateway erhält alle vom Teilnehmer eingegebenen Informationsanforderungen 2 (beispielsweise in Form der Andresse, unter der die gesuchten Informationen zu finden sind, wie eine sogenannte Unified Resource Locator URL Adresse). Das WAP-Gateway überprüft die angeforderten Adressen 3: sofern diese nicht zu vergebühren sind, können die Anfragen (und die zurückgelieferten Daten-Seiten) ungehindert das WAP Gateway passieren.

Ist für die Übertragung der Information jedoch eine Vergebührung vorgesehen, so wird hier eine erste Ausführungsform des erfindungsgemäßen Verfahrens beschrieben.
Aus der Informationsanforderung des Teilnehmers 1 und eigenen gespeicherten Informationen wird eine Anfrage ChrgReq an die Dienstezentrale SCP generiert. Diese enthält:
- eine Benutzerkennung (Subscriber ID),
- die Kennung des Informationsversorgers (Content Provider ID),
- eine Kennung des zu vergebührenden Inhalts (Content ID),
- Vergebührungsereignis (Charge Event).

Die Dienstezentrale berechnet aufgrund des Aufrufes ChrgReq und der ihm bekannten Daten eine Antwort ChrgResp, sowie Statistik-Daten und eventuell anfallenden Gebühren-Tickets für Teilnehmer, die Vorab-Zahlung (Prepaid) vereinbart haben, 5. Die Antwort enthält nun die Aufforderung zur Weiterbehandlung (Annahme oder Ablehung) und eventuell einen Grund.
- Ablehnung:
   das WAP-Gateway erzeugt eine Ablehnungs-Information ("access denied") 7 für den Teilnehmer. Diese kann wiederum beliebige Informationen enthalten, beispielsweise den Grund der Ablehnung.
- Annahme:
   das WAP-Gateway läßt die Anforderung an den Content Provider passieren 8, vom Server wird die angeforderte Information (Daten-Seite) an den Teilnehmer ausgeliefert 9, 10.

Bei allen Teilnehmer, die nicht Vorab-Zahlung (s.o.) vereinbart hatten (Postpaid Subscriber), wird nun die Vergebührungs durchgeführt, es werden Gebühren Tickets erzeugt (Call Data Records, 11).

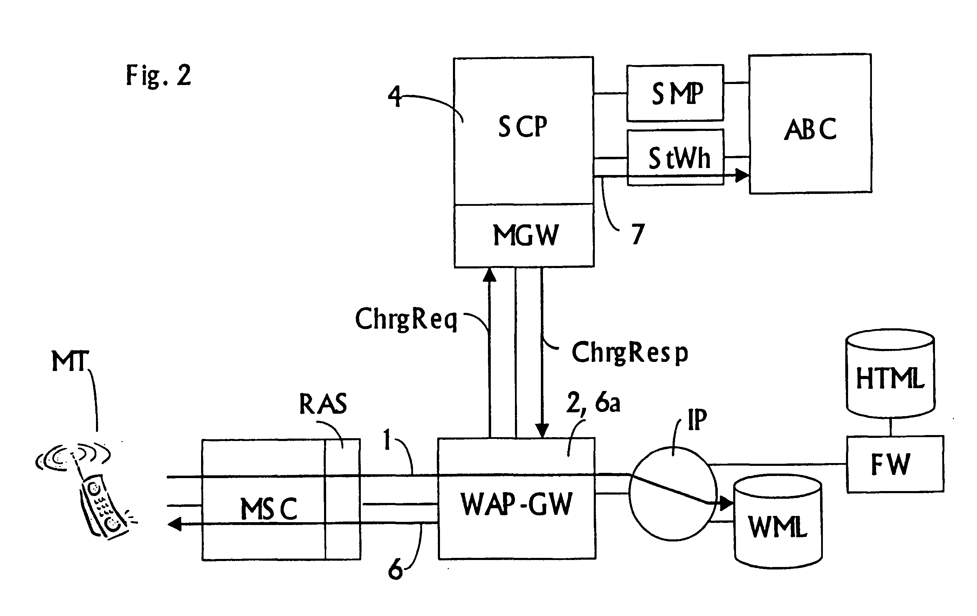

Figur 2 zeigt die Vergebührung gesteuert durch mit der zu vergebührenden Information mitgelieferten Vergebührungsinformation ("Preisschild", "Tag based Charging"). Das dargestellte Kommunikationsnetz entspricht in den Elementen demjenigen von Figur 1.

Der Content Provider muß für jede übertragbare Informationseinheit (Daten-Seiten) die Höhe der von ihm dafür berechneten Übertragungs-Gebühren festlegen. Diese wird dann, wie ein Preisschild, der jeweiligen Informationseinheit zugeordnet (in der Datenbank WML oder HTML). Diese Gebühreninformationen können dabei beispielsweise ebenfalls in HTML oder WML definiert sein.

Fragt nun der Teilnehmer MT über seine Zugangsschnittstelle (WAP-GW) eine Daten-Seite ab, 1, so wird diese nach einer darin enthaltenen Gebühren-Information abgesucht, 2. Eine Abfrage (ChrgReq) wird an die Dienstezentrale (SCP) gesendet, welche beispielsweise folgende Informationen abfragt:
- Subscriber ID
- Content Provider ID
- Content Description
- Charge Event.

Die Dienstezentrale kann nun überprüfen, ob der Teilnehmer bereit und/oder in der Lage ist, die kostenpflichtige Information anzunehmen, 4: er hat beispielsweise im Voraus bezahlt (Prepaid Account) und auf dem Teilnehmer-Konto ist nicht mehr genügend Geld vorhanden. Weiterhin wird die Dienstezentrale Statistik-Daten (mit und für eine Management Instanz SMP) sammeln.
Schließlich wird eine Antwort (ChrgResp) generiert, welche das Resultat der Überprüfung enthält, sowie gegebenenfalls einen Grund.

Abhängig von der Antwort wird eine Meldung an den Teilnehmer generiert:
bei einem negativen Resultat der Überprüfung wird die ursprünglich angeforderte Daten-Seite, sofern bereits von der Zugangsschnittstelle freigegeben und eine entsprechende Information beispielsweise mit dem Inhalt "access denied" an den Teilnehmer weitergegeben, 6.

Ist das Überprüfungs-Resultat postitiv, so kann optional die Gebühren-Information vor der Übertragung der Daten-Seite an den Teilnehmer durch die Zugangsschnittstelle entfernt werden, 6a.

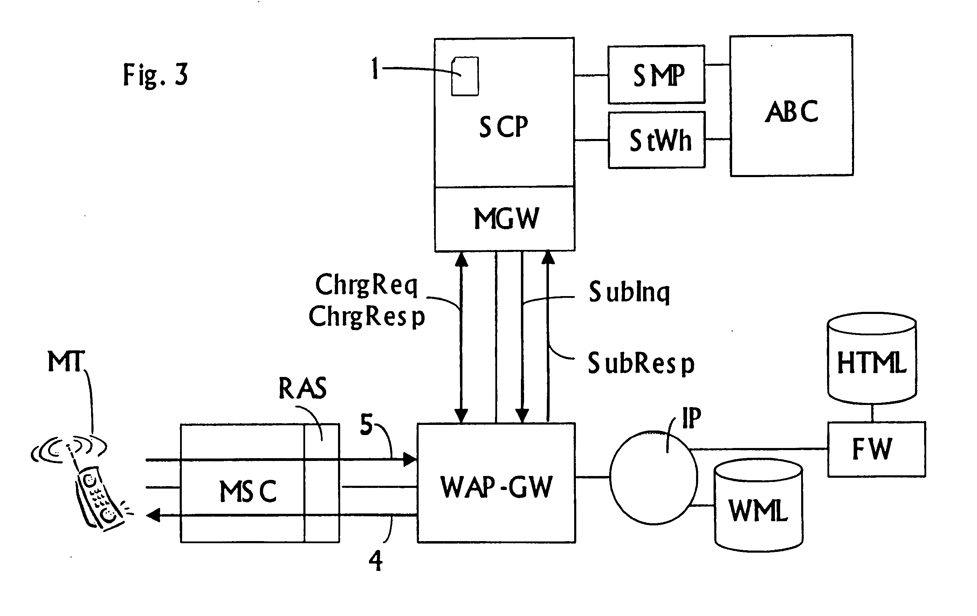

In beiden Lösungen bearbeitet und beantwortet der SCP anhand des gespeicherten Teilnehmer-Profils, 1, den Charge Request, siehe Figur 3.
Bewertungskriterien können sein:
- Höhe des Prepaid Kontos
- Höhe der einzelnen Gebühr / Summe der Gebühren
- Inhalt
- Content Provider.

Optional kann nun eine Anfrage beim Teilnehmer gestartet werden. Dafür fordert die Dienstezentrale SCP die Schnittstelle auf, SubInq, eine Information (bspw. in Form einer Daten-Seite) zu generieren, welche die Gebühreninformation enthält, und an den Teilnehmer zu senden, 4.

Der Teilnehmer kann diese Anfrage beantworten, 5, beispielsweise durch Aktivieren eines Knopfes auf der gesendeten Daten-Seite, und damit das Übertragen der gewünschten Informationen bestätigen oder auch abbrechen.
Die Antwort des Teilnehmers wird dann an die Dienstezentrale, SCP, übermittelt, SubResp.

Das Konto von PrePaid Teilnehmer kann direkt belastet werden, für PostPaid-Teilnehmer wird ein Ticket (in IN Terminologie CDR: Call Data Record) geschrieben, das vom Billing Center ABC des Operators für die monatliche Telefonrechnung verarbeitet wird. Schnittstellen zu Bank- und Kreditkarteninstituten ermöglichen die Belastung der entsprechenden Konten.

Die konkrete Realisierung kann beispielsweise mittels des von Siemens gestellten INXpress realisiert werden.

### Abkürzungsverzeichnis

- ABC: Administration & Billing Center
- CDR: Call Data Record
- DB: DataBase
- FW: FireWall
- HTML: HyperText Markup Language
- HTTP: HyperText Transport Protocol
- IP: Intranet
- MGW: Messaging Gate Way
- MSC: Mobile Switching Center
- MT: Mobile Terminal
- RAS: Remote Access Server
- SCP: Service Control Point
- SMAP: Service Management Access Point
- SMP: Service Management Point
- StWH: Statistic WareHouse
- URL: Unified Resource Locator
- WAP: Wireless Application Protocol
- WML: Wireless Markup Language
- XML: Extended Markup Language

## Patentansprüche

1. Verfahren zur Vergebührung des Übertragens von Informationen in Kommunikationsnetzen über eine Schnittstelle (WAP-GW), welche den Zugriff auf und den Transport der gewünschten Informationen kontrolliert bei dem die Höhe der Vergebührung abhängig ist vom Inhalt der zu übertragenden Informationen,
**dadurch gekennzeichnet, dass**
- die Schnittstelle (WAP-GW) eine Anfrage (ChrgReq) an eine zentrale Instanz (SCP) im Netz generiert, welche die Gebühren des Teilnehmers (MT) in dem Kommunikationsnetz verrechnet, und
- die zentrale Instanz (SCP) abhängig von der in der Anfrage enthaltenen Angaben und ihr zur Verfügung stehenden Informationen über den Teilnehmer und Informationsanbieter entscheidet, der gebührenpflichtigen Übertragung der Informationen zuzustimmen oder diese abzulehnen, und
- dieses an die Schnittstelle zurückmeldet (ChrgRes).

2. Verfahren nach Patentanspruch 1,
**dadurch gekennzeichnet, dass**
die Übertragung von Informationen in Abhängigkeit von der Gebühreninformation durch die Schnittstelle (WAP-GW) zugelassen oder verhindert wird.

3. Verfahren nach einem der vorigen Patentansprüche,
**dadurch gekennzeichnet, dass**
die zu übertragende Information die Höhe der Gebühren für die Übertragung enthält, wobei diese auch gleich Null sein kann.

4. Verfahren nach einem der der vorigen Patentansprüche,
**dadurch gekennzeichnet, dass**
die Schnittstelle (WAP-GW) zusätzliche abgespeicherte Vergebührungsinformationen über zu übertragenden Information verwendet, wobei diese auch die Höhe der Vergebührung enthalten kann.

5. Verfahren nach einem der vorigen Patentansprüche,
**dadurch gekennzeichnet, dass**
die Auswahl der gewünschten Informationen durch Angabe einer Adresse (URL) geschieht.

6. Verfahren nach einem der vorigen Patentansprüche,
**dadurch gekennzeichnet, dass**
die Informationen in einer speziellen Beschreibungssprache (WML, HTML, XML) vorliegen.

7. Verfahren nach einem der vorigen Patentansprüche,
**dadurch gekennzeichnet, dass**
- wenn der Teilnehmer (MT) eine Information abruft, und
- die zentrale Instanz die Übertragung zuläßt, dann
- dem Teilnehmer vor der Informationsübertragung eine Gebühreninformation übertragen wird, und
- er der Informationsübertragung zustimmen oder sie ablehnen kann.

8. Anordnung zum Vergebührung des Übertragens von Informationen in Kommunikationsnetzen, mit
- mindestens einer Quelle für zu übertragende Information (HTML, WML, XML),
- eine Gebühreninstanz (SCP) im Kommunikationsnetz, welcher Informationen über die Gebührenabrechnungen der Kommunikations-Teilnehmer zur Verfügung steht, und
- eine Schnittstelleninstanz (WAP-GW), welche die Informationsanforderung eines Teilnehmer (MT) empfängt, und
eine Abfrage an die Gebühreninstanz generiert (ChrgReq) aus Teilnehmerdaten der Informationsanfrage und inhaltsabhängige Gebührendaten der abgefragten Informationen, und
abhängig von der Antwort der Gebühreninstanz (ChrgRes) die Übertragung der Information von der Quelle zum Teilnehmer steuert.

9. Anordnung nach Patentanspruch 8
**dadurch gekennzeichnet, dass**
die inhaltsabhängigen Gebührendaten in der Information (HTML, WML, XML) enthalten ist.

10. Anordnung nach Patentanspruch 8,
**dadurch gekennzeichnet, dass**
die inhaltsabhängigen Gebührendaten in der Schnittstelleninstanz (WAP-GW) gespeichert sind.

11. Anordnung nach einem der Patentansprüche 8 bis 10,
**dadurch gekennzeichnet, dass**
von der Schnittstelleninstanz (WAP-GW) bei negativer Antwort (ChrgRes) der Gebühreninstanz eine Ablehnungs-information an den Teilnehmer (MT) gesendet wird.

## Claims

1. Method for charging for the transmission of information in communications networks via an interface (WAP-GW) which controls the access to and the transfer of the desired information, in which method the level of the charging is dependent on the content of the information to be transmitted, **characterized in that**
- the interface (WAP-GW) generates a request (ChrgReq) to a central entity (SCP) in the network, which request (ChrgReq) bills the charges of the subscriber (MT) in the communications network, and
- the central entity (SCP) decides, as a function of the information contained in the request and information relating to the subscriber and information provider which is available to it, to accept or reject the charge-incurring transmission of the information, and
- reports this back to the interface (ChrgRes).

2. Method according to Patent Claim 1, **characterized in that** the transmission of information is permitted or prevented by the interface (WAP-GW) as a function of the charge information.

3. Method according to one of the preceding patent claims, **characterized in that** the information to be transmitted contains the level of charges for the transmission, it being possible for said level also to be equal to zero.

4. Method according to one of the preceding patent claims, **characterized in that** the interface (WAP-GW) uses additional stored charging information relating to the information to be transmitted, it being possible for said information also to contain the level of the charging.

5. Method according to one of the preceding patent claims, **characterized in that** the selection of the desired information is carried out by specifying an address (URL).

6. Method according to one of the preceding patent claims, **characterized in that** the information is present in a special description language (WML, HTML, XML).

7. Method according to one of the preceding patent claims, **characterized in that**
- if the subscriber (MT) calls information, and
- the central entity permits the transmission, then
- charge information is transmitted to the subscriber before the transmission of information, and
- said subscriber can accept or reject the transmission of information.

8. Arrangement for charging for the transmission of information in communications networks, having
- at least one source for information (HTML, WML, XML) to be transmitted,
- a charging entity (SCP) in the communications network to which information relating to the charge billing of the communications subscribers is available, and
- an interface entity (WAP-GW) which receives the information request of a subscriber (MT), and
generates a request (ChrgReq) to the charging entity, said request (ChrgReq) being composed of subscriber data of the information request and content-dependent charge data of the interrogated information, and
controls the transmission of the information from the source to the subscriber as a function of the response of the charging entity (ChrgRes).

9. Arrangement according to Patent Claim 8, **characterized in that** the content-dependent charge data is contained in the information (HTML, WML, XML).

10. Arrangement according to Patent Claim 8, **characterized in that** the content-dependent charge data is stored in the interface entity (WAP-GW).

11. Arrangement according to one of the Patent Claims 8 to 10, **characterized in that** when there is a negative response (ChrgRes) to the charging entity by the interface entity (WAP-GW), rejection information is transmitted to the subscriber (MT).

## Revendications

1. Procédé de taxation de la transmission d'informations dans des réseaux de communication par l'intermédiaire d'une interface (WAP-GW) qui contrôle l'accès aux informations souhaitées et le transport des informations souhaitées,
dans lequel le montant de la taxation dépend du contenu des informations à transmettre,
**caractérisé en ce que**
- l'interface (WAP-GW) génère une demande (ChrgReq) à une instance centrale (SCP) dans le réseau, laquelle calcule les taxes de l'abonné (MT) dans le réseau de communication, et
- **en ce que** l'instance centrale (SCP), en fonction des indications contenues dans la demande et des informations qui lui sont disponibles concernant l'abonné et le fournisseur d'informations, décide d'accepter la transmission taxée ou de la refuser, et
- **en ce qu'**elle signale ceci en retour à l'interface (ChrgRes) .

2. Procédé selon la revendication 1,
**caractérisé en ce que**
la transmission d'informations est autorisée ou est empêchée au moyen de l'interface (WAP-GW), en fonction de l'information de taxe.

3. Procédé selon l'une quelconque des revendications précédentes,
**caractérisé en ce que**
l'information à transmettre contient le montant des taxes pour la transmission, ce montant pouvant être également égal à zéro.

4. Procédé selon l'une quelconque des revendications précédentes,
**caractérisé en ce que**
l'interface (WAP-GW) utilise des informations de taxation mémorisées supplémentaires concernant l'information à transmettre, celle-ci pouvant également comprendre le montant de la taxation.

5. Procédé selon l'une quelconque des revendications précédentes,
**caractérisé en ce que**
la sélection des informations souhaitées est réalisée par l'indication d'une adresse (URL).

6. Procédé selon l'une quelconque des revendications précédentes,
**caractérisé en ce que**
les informations sont présentes dans un langage de description spécial (WML, HTML, XML).

7. Procédé selon l'une quelconque des revendications précédentes,
**caractérisé en ce que**
- lorsque l'abonné (MT) appelle une information, et
- que l'instance centrale autorise la transmission,
- une information de taxe est alors transmise à l'abonné avant la transmission de l'information, et
- **en ce qu'**il peut accepter la transmission de l'information ou la refuser.

8. Dispositif de taxation de la transmission d'informations dans des réseaux de communication, comprenant
- au moins une source pour l'information à transmettre (HTML, WML, XML),
- une instance de taxation (SCP) dans le réseau de communication, laquelle dispose d'informations sur la facturation de l'abonné de communication, et
- une instance d'interface (WAP-GW) qui reçoit la demande d'information d'un abonné (MT) et
génère une demande à l'instance de taxation (ChrgReq), à partir de données d'abonné de la demande d'information et des données de taxes dépendantes du contenu des informations demandées, et qui,
en fonction de la réponse de l'instance de taxation (ChrgRes), commande la transmission de l'information de la source à l'abonné.

9. Dispositif selon la revendication 8,
**caractérisé en ce que**
les données de taxes dépendant du contenu sont contenues dans l'information (HTML, WML, XML).

10. Dispositif selon la revendication 8,
**caractérisé en ce que**
les données de taxes dépendant du contenu sont mémorisées dans l'instance d'interface (WAP-GW).

11. Dispositif selon l'une quelconque des revendications 8 à 10,
**caractérisé en ce**
**qu'**une information de refus est émise à l'abonné (MT) par l'instance d'interface (WAP-GW) en cas de réponse négative (ChrgRes) de l'instance de taxation.
